# EUROPEAN PATENT SPECIFICATION

(11) **EP 2 730 448 B1**
(45) Date of publication and mention of the grant of the patent: **13.12.2017**
(21) Application number: 13425145.3
(22) Date of filing: 06.11.2013
(51) Int. Cl.: B60K 28/02, B60K 28/10, B60W 40/08, B60W 40/02, B60W 40/09, B60W 40/10, B60W 30/00, B60W 50/08

(54) **Method and system for control of the residual efficiency of man-vehicle interaction**
Verfahren und System zur Steuerung der Resteffizienz der Mensch-Fahrzeug-Interaktion
Procédé et système pour le contrôle de l'efficacité résiduelle de l'interaction homme-voiture

(30) Priority: 07.11.2012 IT RM20120540
(43) Date of publication of application: 14.05.2014
(73) Proprietor: UNIVERSITA' DEGLI STUDI "G. D'ANNUNZIO", I-66100 Chieti (IT)
(72) Inventor: Merla, Arcangelo, 66100 Chieti (IT)
(74) Representative: Iannone, Carlo Luigi

(56) References cited:
- DE-A1- 19 600 734
- DE-A1- 19 700 353
- US-A1- 2007 142 987
- US-A1- 2010 106 365
- JÖRN MARTEN WILLE ET AL: "rateEFFECT - Entwicklung eines Werkzeugs zur Effizienzwewertung aktiver Sicherheitssysteme", 5. TAGUNG FAHRERASSISTENZ, 16 May 2012 (2012-05-16), pages 1-20, XP055072634, München DE
- MARCUS STRAND ET AL: "Advanced evaluation of information fusion for perceptive driver assistance systems based on an environment and driving silmulation", 4. TAGUNG FAHRERASSISTENZ, 15 April 2010 (2010-04-15), - 16 April 2010 (2010-04-16), pages 1-27, XP055072507, München (DE)
- B. SCHICK ET AL: "Simulationsmethoden zur Evaluierung und Verifizierung von Funktion, Güte und Sicherheit von Fahrerassistenzsystemen im durchgängigen MIL-, SIL-, und HIL-Prozess", 3. TAGUNG AKTIVE SICHERHEIT DURCH FAHRERASSISTENZ, 7 April 2008 (2008-04-07), - 8 April 2008 (2008-04-08), pages 1-14, XP055072518, München

## Description

The present invention concerns a method and system for the control of the residual efficiency of the interaction man-vehicle.

More in detail, the present invention concerns a method and system for the feedback control of the residual efficiency of the interaction between a user and a utilized vehicle. The present invention can be utilized to increase the residual efficiency. The present invention can be advantageously applied to the interaction between drivers and engine devices, such as cars, motor vehicles, transport means, supervision and control devices, work tools, training devices, and even devices dedicated to entertaining such as videogames.

### State of the art

The wide diffusion of automobiles imposes to search for tools, which optimise the interaction between the driver and vehicle aimed at guaranteeing the highest security. The achievement of such an aim imposes the search for suitable solutions along two different action lines: the monitoring of the good operation and the constant verification of security conditions of the vehicle on one hand, and the monitoring of the psychophysiological state of the driver, on the other hand. Concerning the first aspect, the technological research has provided the modern automobiles with complex systems of monitoring of the operation state of the vehicle, by means of a dense network of sensors in communication with each other and with one or more computerised central units, which inform the driver of possible malfunctionings or attainments of attention thresholds, or the performance of the vehicle (for example, a device for the control of the drive or assisted braking).

More recently, instead, one has been got the importance of the second aspect. Vehicles of the higher segments are increasingly endowed with devices designed to prevent accidents caused by tiredness or distraction of the driver. Among these devices, we can mention reverse motion cameras (which are used also on the buses), front vision by infrared rays in case of fog or poor visibility (NightDriver on BMW series 7), radars to prevent collisions with preceding cars or pedestrians (Volvo) or, such as for example for Mercedes cars of higher segment, the detection of the eye blinking as symptom of tiredness, that has been developed by Bosch. In such a case, one uses a facial recognition system based on images (generally recorded in the visible or near infrared band). By measuring the eyelash blinking, the system attempts at recognizing micro-sleep phases and the waking state of the driver. If one records drowsiness signs, a vocal messages and/or visual warnings are activated by a control unit, while suitable mechanisms either fasten the seat belt of the driver to immediately draw his/her attention or intervenes on the cockpit or passenger area environment to restore driver's attention. Breath-analyser systems have been also proposed by some French car manufacturers (i.e., the DrinkingDriver on Peugeot).

Other solutions for monitoring improper behaviour of the driver are based on systems which identify specific symptoms of the inattention or distraction of the driver, such as for example possible lane crossing (i.e., Attent Assist by Citroen). Besides the speed and longitudinal and transversal accelerations, the Mercedes system detects, for example, also the activation of the indicators and pedals as well as other particular manoeuvres of the driver and the influence of external agents such as lateral wind or wearing course unevenesses. If then the system deems it necessary, it activates a warning audio message and it displays warning video messages on the on-board computer or display. Such actions could be also accompanied by fasting seat belt to draw immediately the attention of the driver.

Another solution has been proposed in DE 19700353 A1. The system is connected to the sensors monitoring the driving and ambient conditions of a vehicle. It undertakes the complex analysis to determine the optimum safe vehicle operation. Speed, distance from other vehicles, outside temperature, dampness, visibility, loading, vehicle characteristics and other parameters, are quickly identified and compared with ideal values. The risks and the behaviour of the driver in these traffic conditions over a predetermined time can be evaluated and displayed. An operation centre in bidirectional communication with the vehicle can impose safety controls.

All the aforementioned and known devices for monitoring the driver's performances or state share the common feature of keeping at observing one or just a limited number of physiological or behaviour parameters or processes. The obtained information are usually processed separately and not integrated to each other.

Other solutions provide instead that the continuous monitoring of physiological or behavioural parameters may trigger actions to condition the physiological or neuro-psychological state of the driver, by intervening on the passenger compartment ambient, such as tuning of the air conditioning system, using different colours lights or sounds. This is for example the case of the patent application in the name of Ferrari WO2008/084370 A1. In this patent application, one provides that a feedback control method and a unit of a servo-controlled system act on the ambient around the user by intervening on at least an ambient feature capable of conditioning psychophysical state of the user (for example temperature, humidity, ventilation). The control unit provides a memory device, wherein the optimal or desired values of the psychophysical parameter of the user are stored (for example its temperature or the driver's heartbeat). A monitoring device of these psychophysical parameters evaluates their value periodically and sends them to the control unit, which, by acting on the servo-assisted system, modifies the ambient parameters to the achievement of optimal psychophysical values predefined by the user.

The patent does not indicate specifically which method is used for the monitoring of the psychophysical parameters, whilst it mentions the use of a closed feedback model for the management of the servo-assisted system.

One of the most important aspects to guarantee the effectiveness of the security devices based on the psychophysical parameters monitoring and to obtain a good compliance of the user is the necessity to execute the monitoring automatically, in a non-invasive and contact-less way. Some solutions propose to measure the heartbeat rate or the electrodermal activity by embedding specific sensors in the steering wheel and in the knob of the gearbox. A totally different solution comes from the technical possibilities given by the thermal infrared imaging. By means of a special thermal infrared cameras and suitable physical-mathematical or statistical models it is indeed possible to monitor some vital signs or physiological parameters remotely, without using contact sensors and in a completely non-invasive way, thanks the recording of the spontaneously emitted human body thermal radiation. Among these parameters, there are the respiratory rate, the heartbeat, the skin perfusion, the eye blinking, the facial expressions, besides obviously the skin temperature and its distribution.

It is interesting to observe that no known device proposes to integrate the information, provided by the driving behaviour, by the monitoring the automobile's efficiency and those describing the actual psychophysical state of the driver, to quantify the residual efficiency of the human-machine interaction. The residual efficiency of a component or a device or a system is defined here as the actual state of the critical components or devices or system with reference to the capability of such parts or devices or system to accomplish the assigned mission or task.

As an example from the automotive field to explain the concept, we refer to the definition of residual efficiency of the braking systems for heavy-load operational vehicles as defined by the Italian Regulamentation for the Traffic and Vehicles (Codice della Strada), art. 10, which defines the residual efficiency of the braking system as the capability to warranty, under given pre-fixed conditions (i.e., actual speed and load), to stop the vehicle within a stopping distance not inferior to the 70% of the stopping distance recommended for those operational conditions of speed and load.

The concept of residual efficiency pervades many human activities. For example, one can know that his/her automobile has a carburetion defect at high regime, however this does not hinder to use it in a secure way at a lower working regime. Or the efficiency of the brakes might be reduced with respect to the full optimal efficiency, but one relies on the fact that a careful attitude to drive allows to use the automobile within an acceptable range of performances and safety. In the everyday life, the user usually estimates the residual efficiency and the margins allowed to use non-optimal efficiency devices on the basis of his/her own experience and predictions, knowledge of the vehicle and confidence in his/her own capabilities to control the vehicle. It is evident that the objective quantification of the residual efficiency of the vehicle, as well as that of the user, and their combination represents the information that is fundamental to allow the use of vehicles or machines within safe operational limits.

It is object of the present invention to provide a method and a device for controlling the residual efficiency of any man-device interaction, which overcomes the drawbacks and solves the problems of the abovementioned prior art.

We therefore define here the residual efficiency of any man-device interaction as the residual capability of the user to properly use that device to accomplish the assigned mission or task on the basis of his/her actual psychophysiological state and the capability of device to accomplish the assigned mission or task on the basis of its actual operational state.

It is subject-matter of the present invention to provide a method for the control of the residual efficiency of the driver-vehicle interaction according to one of the annexed method claims, which are integral part of the description.

It is further subject-matter of the present invention a system for the control of the residual efficiency of the driver-vehicle interaction, according to any one of the annexed system claims, which are integral part of the description.

The invention will be no described by way of illustration but not by way of limitation, with particular reference to figures of the enclosed drawings, wherein:
- Fig. 1 shows a block diagram illustrating a system portion in an embodiment of the invention;
- Fig. 2 shows an example of functional architecture of the computing modules of the system according to the invention;
- Fig. 3 shows another functional diagram of an embodiment of the system of the present invention;
- Fig. 4 shows an example of flow chart of the algorithm for the estimate of the residual efficiency ER-UX according to the invention, wherein one performs, for example, a multivariate analysis of variance (MANOVA);
- Fig. 5 shows an example of flow chart of the algorithm for the estimate of the residual efficiency ER-MX according to the invention;
- Fig. 6 shows an example of flow chart of the algorithm for the estimate of the residual efficiency ER-GX according to the invention;
- Fig. 7 shows an example of flow chart of a calculation algorithm for the estimate of the residual efficiency ER-UMX according to the invention.

### Detailed description of the invention embodiments

In the following, we will make explicit reference to the description of the use of the method and device in the interaction between the driver of an automobile and the automobile itself, without the loss of generality.

The present invention is constituted by methods and feedback control devices for the estimation and the control of the residual efficiency of the interaction between a driver while driving and the driven automobile.

In the present invention, one provides as input for an only artificial-intelligence algorithm the information on the operation state of the vehicle, the driving behaviour, and the psychophysical state of the driver.

The information about the operation state of the vehicle are provided by the sensors network and control units of the car, even by already patented methods and devices. The information on the psychophysical state are recorded, for example but not exclusively, by a thermal infrared camera installed in the passenger compartment, which provides data on the vital parameters and emotional state of the driver, possibly in combination with other devices for the monitoring of his/her psychophysical parameters, or even by already patented methods and devices. A specific algorithm will determine and maintain under control the residual efficiency level of the driver.

The monitoring of parameters and information is executed in a continuous way, with suitable sampling frequency.

The algorithm determines the residual efficiency level and establishes whether it is compatible with the maintaining of suitable safety levels.

The present invention provides the possibility to act on the vehicle or the ambient around the driver to increase the residual efficiency of the interaction between the driver and the automobile, for example when the device and the method estimate the worsening of the psychophysical conditions or the alert state of the driver.

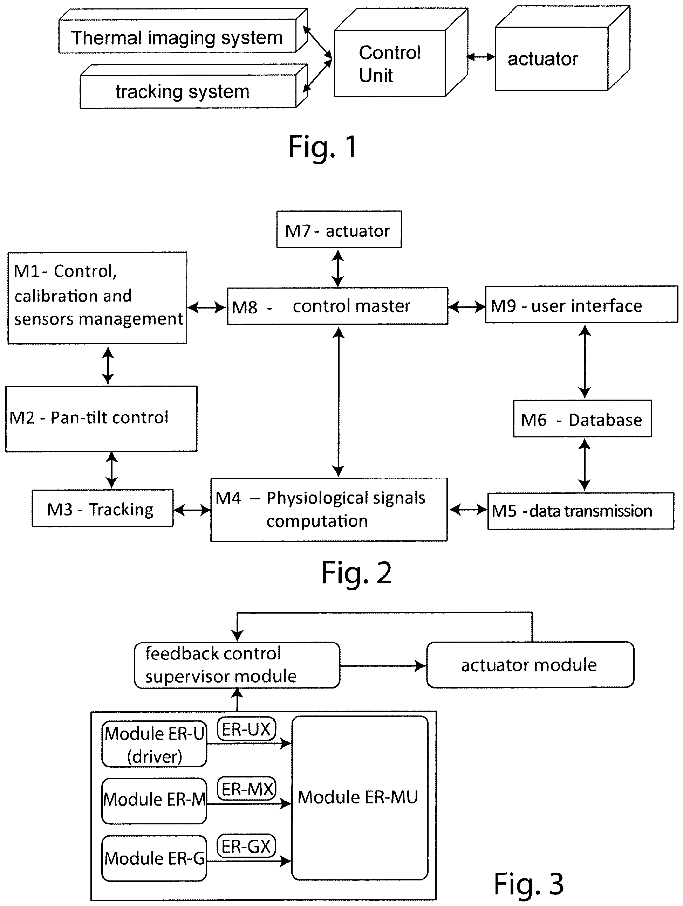

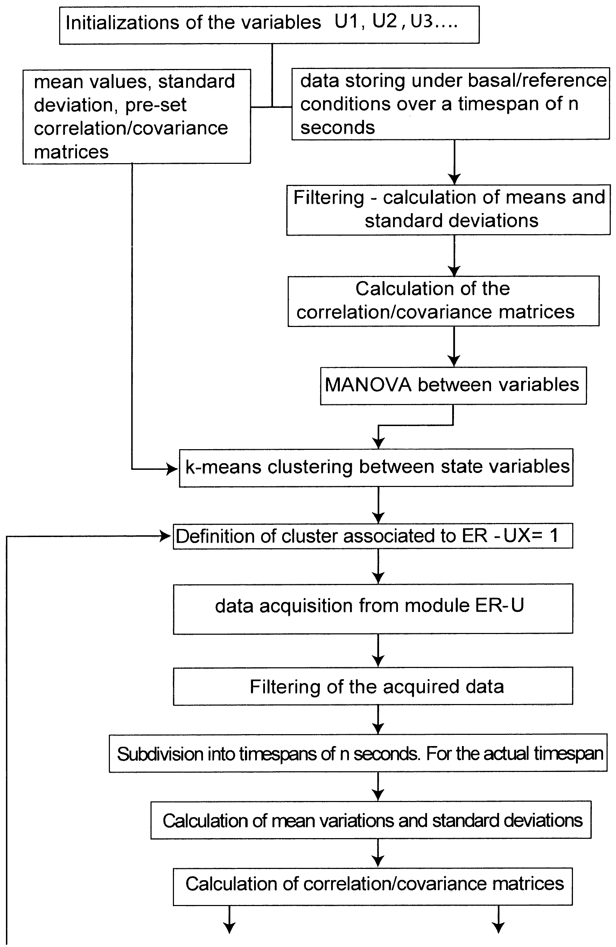

The device provides the integration of at least four modules continuously communicating with each other (cf. Fig. 3):
1. Module for the estimation of the user residual efficiency (ER-U);
2. Module for the estimation of the vehicle residual efficiency (ER-M);
3. Module for the estimation of the user drive behaviour residual efficiency (ER-G);
4. Module for the estimation of the user-vehicle system residual efficiency (ER-UM).

The estimation of the user residual efficiency ER-U includes the network of biophysical sensors and the set of data provided by them and the algorithms for the estimation of the residual efficiency, even by already known methods and devices.

From a hardware point of view (Fig. 1), the fundamental kernel will be constituted by:
1. Miniaturised thermal infrared imaging system, with bolometric technology, having thermal sensitivity of the order of 3-5 Celsius degree hundreds, full frame sampling frequencies of at least 16 frame per second, spatial resolution of the order of some milliradians;
2. Miniaturised and robotised system for doing automatic tracking (tracking module) of the pan-tilt type;
3. Unit for control, timing and data processing (locally or remotely);
4. Command actuator towards external device (alarm, devices control central unit, etc).

Concerning the software component of the driver kernel one has the following functional modules:
M1: control, calibration and sensors management module;
M2: pan-tilt tracking device control module;
M3: skin tracking module;
M4: autonomic signals computational modules;
M5: data transmission module;
M6: database management-storage module;
M7: actuators modules;
M8: general control master module;
M9: user interface module.

The module M1 will manage and control sensors and the optics of the infrared imaging (thermal camera) and will execute the correction of non-uniformity of the sensors array, the loading of the calibration curves, the correction of ambient artefacts, the auto-focusing of the optics.

The module M2 will manage the robotised and automated tracking system of the thermal camera on the portion of interest in its view field.

The module M3 will execute the correction of errors by movements of the regions of interest identified on the thermal images of module M2, wherefrom the physiological relevant data are to be extracted. Module M3 will comprise the algorithms for morphological recognition or "morphing" and the superposition of the visible and thermal images.

The module M4 will receive the thermal data acquired by module M3 and will process them according to the computational algorithms of the signals of physiological interest.

The module M5 will manage the data flow towards/from module M6 of database management-storage and/or control remote unit, in the case this is provided.

The module M7 will manage the communication with the external actuation systems (engine, passenger compartment, etc.). For example, M7 will generate a warning signal, or intervene on the controller of the external device (for example, M7 could intervene on the engine system of the vehicle to limit its speed).

M8 is a driver kernel management master module and is responsible of the communication and the data exchange between the different software modules.

M9 is the user interface module for the programming of specific functionalities or the maintenance/update of the system.

The system composed of the fundamental hardware kernel (components 1, 2, 3,and 4) and of the software modules M1, M2, M3, M4, M5, M6, M7, M8, and M9 is in the following also called and identified as the "Driver Sentinel").

The functional architecture of the Driver Sentinel software system is described in Fig. 2.

In particular, concerning the images acquisition and processing part, the following functional sub-modules can be schematised:
1. Acquisition of the terminal signal and/or thermographic images;
2. Operations of calibration, scaling and automatic verification of the validity of the thermal data;
3. Acquisition of the visible signal into conventional images;
4. Morphological and anthropometric correlation between the images in the visible and the thermal images;
5. Recognition of the zones of the images that are of interest for the measurement, on the basis of the relevant physiological characteristics;
6. Execution of the real measurements, with the necessary software filters for noise reduction;
7. Correlation between the thermal measurements, and/or thermographic maps, and the physiological parameters and recognition of relevant features for data classification;
8. Verification and validation of the detected physiological parameters, application of the attention and warning thresholds and generation of the same thresholds;
9. Creation of a database containing the various situations and the correlations between the thermographic and thermometric measurements and the physiological parameters, to the end of improving along the time the systems' responses in an adaptive way.

Making the reference to Fig. 3, the module for the estimation of the vehicle residual efficiency ER-M includes the network of sensors and car's monitoring central units, the set of data provided by them and the algorithms for the estimation of the residual efficiency, even by already patented methods and devices.

The module for the estimation of the driver-vehicle residual efficiency ER-UM is considered by a mathematical model fed by data and information generated by the three above described modules for the estimation of the residual efficiency.

A fifth module (supervisor) will manage the step of actuation of an intervention on the vehicle (engine, performance, passenger compartment ambient, stimuli to the subject) to optimise residual efficiency of the driver-vehicle interaction, by acting on a sixth module of actuation.

The outputs of the response of the interaction system will feed continuously the same model by a closed loop feedback mechanism.

By way of non-limiting example, one describes the operation of the system in the case one wants to monitor the user-vehicle residual efficiency during the night driving. The crucial parameter for the security, besides the efficiency of the vehicle, is the waking state of the user and the absence of sleepiness episodes.

The method is described in the following, with reference to the problem of the estimation of the residual efficiency in case of sleepiness. The method provides different steps described in the following. Finally, a flow diagram will illustrate the functional relationships between the different steps and modules of the device.

With reference to the above specific problem, let's imagine to define and therefore explicitly monitor certain state variables. It is here specified that the variables as defined in the following sections represent only an exemplary set of all the variables potentially usable.

For each module the state variables and the estimate function of the residual efficiency are defined.

### Module ER-U

The module ER-U transmits to the module ER-UM the biophysical data, for example, but not only, the respiratory frequency, exhaled temperature, skin temperature and blinking frequency. Each data is put in a partial variable relevant to the normality/alteration states of the single biophysical process. The residual efficiency with respect to the single variable is estimated by the difference between the current value of the variable and reference values, which are predefined by the user or the manufacturer, or estimated by auto-adaptive estimations on the basis of the history of its values. The residual efficiency of the user is therefore estimated, for example, by the analysis of mutual correlation of the variables (for example, blinking frequency increases, exhaled temperature reduction indicate a potential sleepiness state). The user residual efficiency is finally quantified into a numerical value ER-UX.

| **ER-U** | | | |
|---|---|---|---|
| **State variable** | **Measured physical quantity** | **Rationale** | **Synthetically** |
| V | Waking states (calculated quantity) | The waking state is to be associated to the increase in the activity of the sympathetic nervous system and the reduction of the activity of the parasympathetic. The activity is monitored by variations with respect to the baseline of the physiological parameters below indicated. | |
| U₁ | Periorial temperature | The periorial temperature is an indicator of the autonomic activity specifically, it has been demonstrated that the periorial temperature is strongly influenced by the cholinergic post-ganglionic perspiration-sudomotor response. In particular, to the variation in the cholinergic and β-adrenergic activity responsible of the perspiration and skin rash, widely correlating with the skin electrodermal signal. It has been demonstrated that micro-sleepiness states or states anticipating the sleepiness are characterised by an increase of the electrodermal signal, whilst waking states are by lowering of these signals. Hence, the increase of the perioral temperature indicates a potential relaxation state precursor of micro-sleepiness states. | When U₁ ↑ |
| | | | V ↓ |
| U₂ | Exhaled temperature | The temperature of the exhaled air, as estimated by the temperature of the air flows near the nostrils, is an indicator of the metabolic activity of the individual. As known, the metabolic activity decreases during sleepiness or pre-sleepiness states. Therefore, a rapid decreasing of the exhaled temperature indicates a potential state of relaxation precursor of micro-sleepiness, whilst the maintaining of values larger than 35°C indicates the presence of metabolic activity, therefore of waking state. | When U₂ ↓ |
| | | | V ↓ |
| U₃ | Forehead temperature | Forehead temperature reflects variations in the cholinergic and β-adrenergic activity responsible of the skin rush. This is an index of parasympathetic activity. | When U₃ ↑ |
| | | | V ↓ |
| U₄ | Nose temperature | The nose temperature is an indicator of the autonomic activity. More in detail, it has been demonstrated that the nose temperature is strongly influenced by the cholinergic post-ganglionic perspiration-sudomotor activity. In particular, to the variation in the cholinergic and β-adrenergic activity responsible of the perspiration and skin rush, widely correlating with the skin electrodermal signal. It has been demonstrated that micro-sleepiness states anticipating sleepiness are characterised by increase of the electrodermal signal, whilst waking states are by lowering of these signal. Therefore, the increase of the nose temperature indicates a possible relaxation state precursor of micro-sleepiness states. | When U₄ ↑ |
| | | | V ↓ |
| U₅ | Breathing frequency | The respiration frequency decreases during the sleepiness or pre-sleepiness phases. The respiratory frequency can be estimated starting from the exhaled temperature oscillations, by peak-to-peak methods or frequency analysis. | When U₅ ↓ V ↓ |
| U₆ | Blinking frequency | The blinking frequency (eye winking) increases during the sleepiness or pre-sleepiness phases. The blinking frequency can be estimated starting from oscillations of temperature of eye region, by peak-to-peak methods or frequency analysis. | When U₆ ↑ |
| | | | V ↓ |

The variables U₁, U₂, U₃, U₄, U₅, U₆ vary with respect to baseline values with variation of the waking or sleepiness state. Some of them correlate or covariate, other ones anti-correlate or counter-variate with the state of the variable V. Substantially, they can come out to be redundant or complementary, and there is evidence in the literature of possible individual variations in the behaviour of the state variables with respect to the waking, pre-sleepiness or sleepiness state.

There are different possible modes to estimate ER-UX. In the following, one of them is described without loss of generality.

Let's consider a set of observations of the variables within a timespan: U₁ = U₁(t), U₂ = U₂(t) ..... Uₙ = Uₙ(t).

These observations can be represented as trajectories in the phase space as defined by the axes U₁ = U₁(t), U₂ = U₂(t) ..... Uₙ = Uₙ(t).

The condition of optimal or normal physiological activity of the subject will result in two accumulation regions or attractors of the trajectories in the phase space, either according to the chaotic attractors' logic or according to the approach, for example, of the recurrence quantitative analysis. The deviation from the normality condition of one or more of the variables U₁, U₂, U₃, ..., Uₙ, will determine new trajectories or their accumulation points (more generically statistical or non-linear distributions of the variables in the phase space), that are as much far away as the deviation from the average or reference values is larger. The distance between the trajectories or accumulation points (more generically between the states of the distributions in the phase space) can be quantified by different mathematical operators, such as Liapunov exponents or Jeffrey divergence, just to mention some of them.

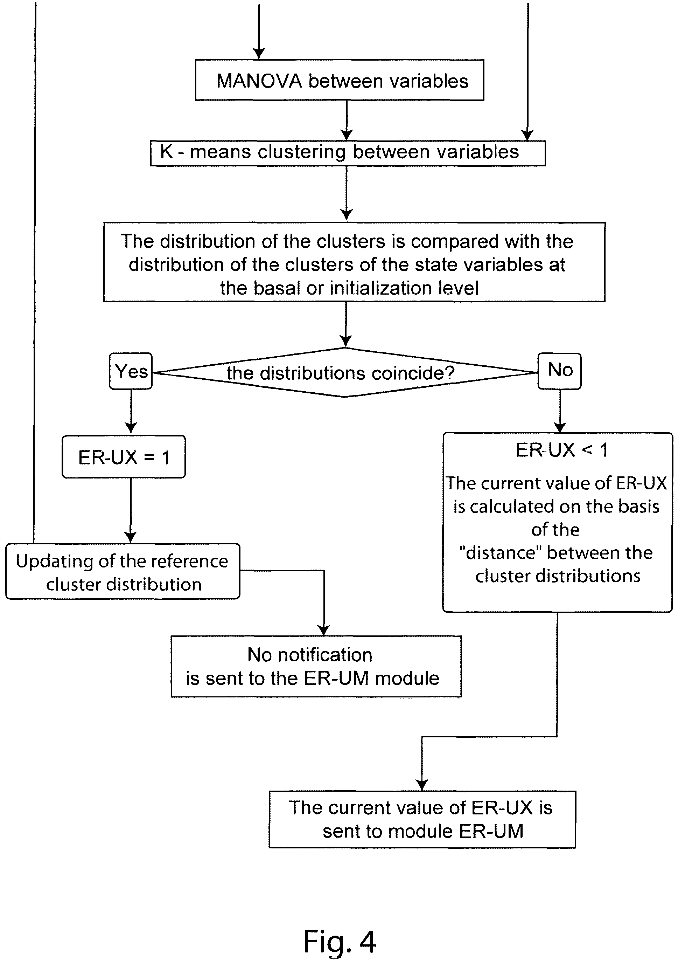

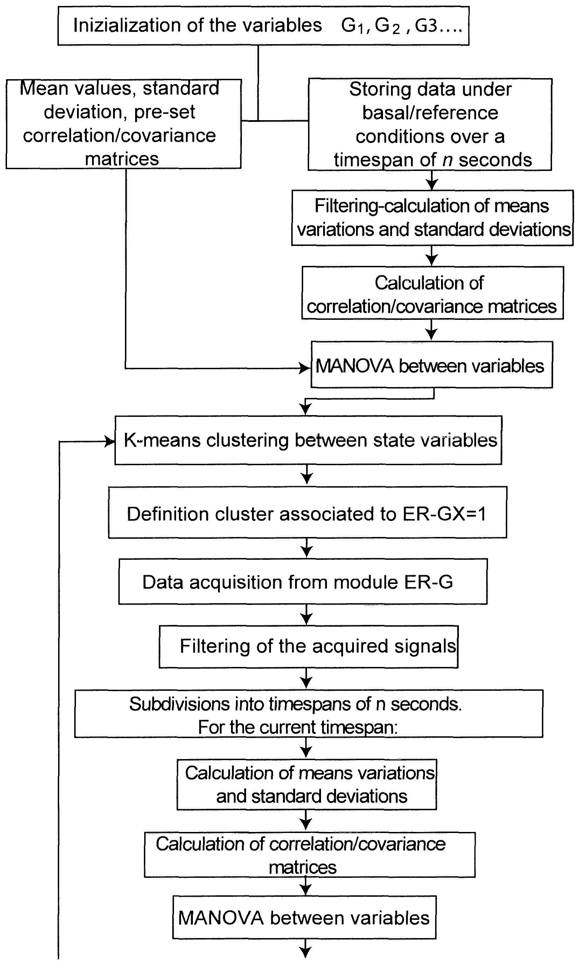

According to an aspect of the invention, the algorithm of estimation of residual efficiency ER-UX provides the flow chart according to Fig. 4.

### Modulo ER-M

The module ER-M transmits to the module ER-UM the data relating to the wearing and operation state of the different electromechanical devices, among which, for example, rates (liquid pressure, wearing state, disks temperature), tyres (pressure), engine (oil temperature, combustion, injection), cooling (liquid temperature, pump operation), and transmission. Each data goes into a partial variable relevant to the wear/operation state of the single device. The residual efficiency of the single device is estimated as a complement to 100% of the variable. The residual efficiency of the vehicle is for example estimated as the weighted average of the efficiencies of the single systems, wherein the weights can be set/selected by the user or the manufacturer, or estimated by auto-adaptive estimates on the basis of the history of the data. The residual efficiency of the vehicle is finally quantified into a numerical value ER-MX.

| **ER-M** | | |
|---|---|---|
| **State variable** | **Measured physical quantity** | **Rationale** |
| M₁ | State of residual efficiency in brakes | The state of efficiency of the brakes depends on several variables and is in general monitored by the on-board electronics by the measurement of the wearing of brake pads, disks consumption, pressure level of the servo-assisted circuit. The state of efficiency can be defined by thresholds. For example: the efficiency of the pads is estimated in 100%, 75%, 50%, 25% if their consumption is respectively within 25%, 50%, 75%. Similarly one can define thresholds for the wear of disks or for the values of pressure of the circuit. The residual efficiency of the braking system can be estimated by the weighted average of the efficiency values of the components. |
| M₂ | State of residual efficiency of tyres | Many cars have tyres pressure sensors and indicators of the wearing of the tread or temperature of the tyre. The state of efficiency can be defined by threshold. For example: the residual efficiency of each parameter is estimated in 100%, 75%, 50%, 25% if its deviation from the ideal condition is respectively within 25%, 50%, 75%. |
| M₃ | State of residual efficiency of the cooling system | Also for this parameter the above comments can hold. |
| M₄ | State of residual efficiency of the engine | Also for this parameter the above comments can hold. |
| Mₙ | Other potential variable | Also for this parameter the above comments can hold. |

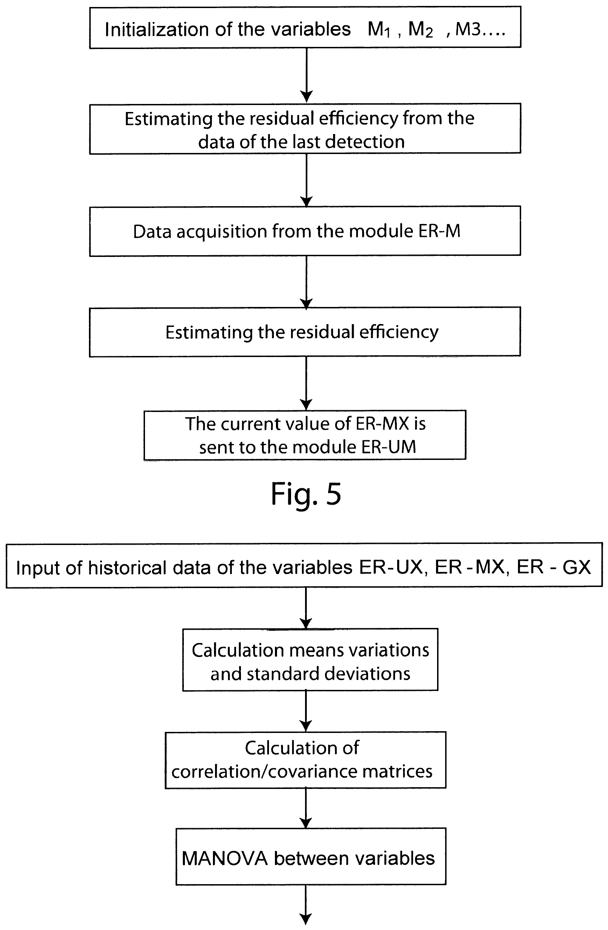

The residual efficiency of the vehicle ER-MX is estimated by the weighted average of the residual efficiency of each parameter (cf. Fig. 5).

### Module ER-G

The module ER-G transmits to the module ER-UM data on the instantaneous speed, longitudinal and lateral instantaneous acceleration, pressure on the brake pedal, braking force, rotation of the steering wheel, position of the car via GPS and coherence of its trajectory with its road layout. Each data goes into a partial variable relevant to the use of the single device. The residual efficiency of the drive style is estimated for example by the analysis of mutual correlation of the variables (for example, lateral acceleration values that are not correlated to the direction of the wheels indicate an uncontrolled drift of the vehicle). The residual efficiency of the drive style is finally quantified into a numerical value ER-GX.

| **ER-G** | | | |
|---|---|---|---|
| **State variable** | **Measured physical quantity** | **Rationale** | **Notes** |
| G₁ | Transversal deviation from the ideal trajectory | The ideal trajectory can be calculated on the basis of the electronic road maps. The average deviation from the ideal trajectory can be controlled via GPS. Thresholds of variance of the deviation and variation in the duration of the deviation. | |
| G₂ | Control of the swerve direction | There are several patents performing the continuous monitoring of the intervention of the driver on the steering wheel to understand his waking state. Small and frequent corrections are indeed indicative of an active state of waking, whilst more important and sparse corrections are associated to possible carelessnesses or tiredness. | |
| G₃ | Transversal and longitudinal accelerations | The values of the acceleration should be always consistent with the trajectory indicated by the swerve angle. The incongruence between these couples of parameters indicates a non-optimal control of the vehicle by the driver. | |
| ...... | ...... | ....... | |
| Gₙ | Other possible variable | Listed variable are given by way of illustration only and do not exhaust the problems | |

The variables G₁, G₂, G₃, ..., Gₙ vary with respect to baseline values with the variation of the efficiency in the drive style. Some ones among them correlate or covariate, other ones anti-correlate or counter-variate.

There are different possible ways to estimate ER-GX. In the following, one of them will be described without loss of generality.

Let's consider a set of observations of the variables within a timespan: G₁ = G₁(t), G₂ = G₂(t) ... Gₙ = Gₙ(t).

These observations can be represented as trajectories in the phase space as defined by the axes G₁ = G₁(t), G₂ = G₂(t) ... Gₙ = Gₙ(t).

The condition of optimal or normal physiological activity the subject will result in two accumulation regions or attractors of the trajectories in the phase space, either according to the chaotic attractors' logic or according the approach, for example, of the recurrence analysis. The deviation from the normality condition of one or more of the variables G₁, G₂, G₃, ..., Gₙ, will determine new trajectories or their accumulation points (more generically distributions of the variables in the phase space), that are as much faraway as the deviation from the average or reference values is larger. The distance between the trajectories or accumulation points (more generically between the system states distributions) can be quantified by different mathematical operators, such as Liapunov exponents or Jeffrey divergence, just to mention some of them.

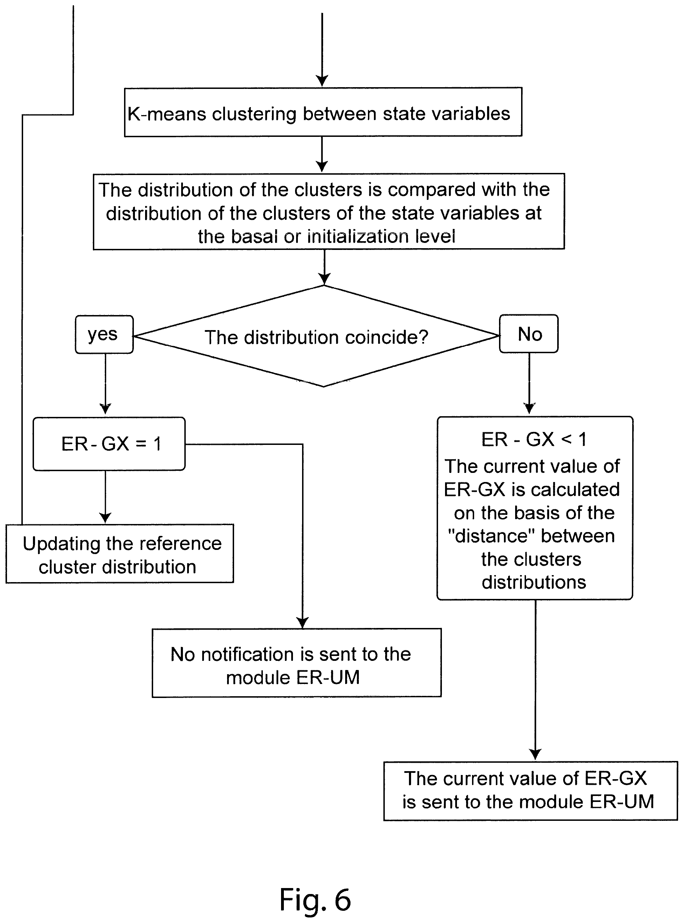

In an embodiment, the algorithm of estimation of the residual efficiency ER-GX provides the operations flow chart of Fig. 6.

### Module ER-UM

The module ER-UM, once received all the data from the various modules, estimates the most likely residual efficiency value ER-UMX by classification analysis and pattern recognition of the distribution of the variables ER-UX, ER-MX, ER-GX, or by means of algorithms similar to those developed for the estimation of ER-UX and ER-GX.

If ER-UMX is the above predefined (or estimated by auto-adaptive estimates) attention threshold, ER-UM communicates to the supervisor module the necessity of intervention.

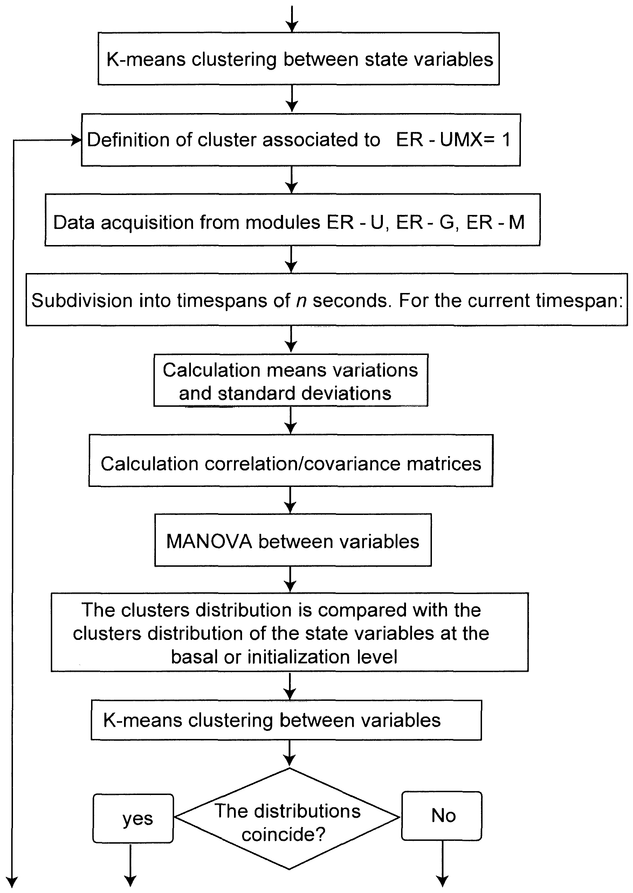

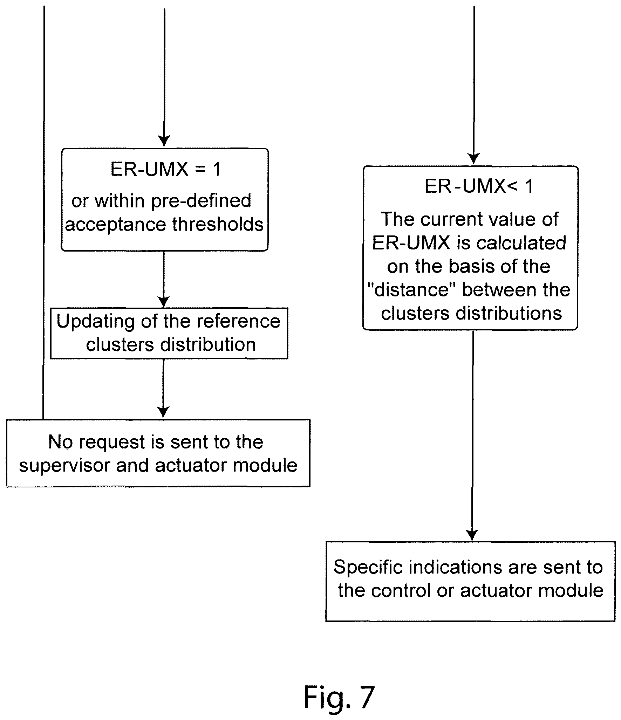

An example of calculation algorithm of ER-UMX is given in Fig. 7.

The supervisor will activate a series of actuators to maximise the residual efficiency of the specific process (or specific processes if more than one) or of the system, for example by limiting automatically the speed to values compatible with the residual efficiency status, or inviting the driver to adopt a more prudent drive style, or trying to increase the waking state of the subject even by devices and methods defined in others patents (seat vibration, illumination of the passenger compartment etc.).

### Further embodiment of the invention

According to an embodiment of the invention it is provided a method for controlling the residual efficiency of the driver-vehicle interaction, characterized in that it utilizes:
- a set of biophysical sensors suitable to measure a corresponding set of driver's biophysical variables;
- a set of sensors of vehicle wear and operation of the electromechanical devices of the vehicle, suitable to measure a corresponding set of wear and operation variables;
- a set of vehicle ambient and operation sensors, suitable to measure a corresponding set of ambient and operation variables;
- a set of internal actuators of the vehicle, suitable to modify said biophysical variables and/or said operation variables and/or said ambient variables, also eventually able to send warning messages or inputs to the driver;
and in that it executes the following steps;
A. Estimating a residual efficiency of the driver (ER-U), which expresses quantitatively the ability level of the driver to continue a safe drive, on the basis of the comparison of his/her actual psychophysiological state, evaluated through said measured biophysical variables, with a reference baseline psychophysiological state, evaluated through statistical distributions or historical time series of those biophysical variables;
B. Estimating a residual efficiency of the vehicle (ER-M), which expresses quantitatively the ability level of the vehicle to continue a safe operation, on the basis of the comparison of its actual operational state, evaluated through said measured wear and operation variables, with a reference operational state, evaluated through statistical distributions or historical time series of those wear and operation variables
C. Estimating a residual efficiency of the driving behaviour of the driver (ER-G), which expresses quantitatively the ability level of the driver to continue a safe driving behaviour, on the basis of the comparison of said ambient and operation variables with reference values, evaluated through statistical distributions or historical time series of those ambient and operation variables;
D. On the basis of the estimated values of the residual efficiency of the driver ER-U, of the residual efficiency of the vehicle ER-M and of the residual efficiency of the driving behaviour of the driver ER-G, calculating an overall residual efficiency value of the driver-vehicle interaction (ER-UM) defined as the residual efficiency of the driver to properly and safely use that vehicle on the basis of his/her actual psychophysiological state and the actual operational states of the vehicle itself;
   - E. If the value of such a residual efficiency of the driver-vehicle interaction is below a predetermined threshold, verifying which ones among said residual efficiency of the driver, of the vehicle and of the driving behaviour of the driver are below corresponding predetermined thresholds or deviating from reference statistical distributions, and controlling said set of actuators so as to modify the relevant driver biophysical variables, vehicle wear and operation variables and vehicle ambient and operation variables to the end of increasing the residual efficiency of the driver-vehicle interaction;
F. Continuously repeating steps from A to E, comparing in step E the actual estimation of the residual efficiency of the driver-vehicle interaction with the reference values, thus to setting proper actions in the subsequent cycle,
G. Realizing a feedback control of the actuators on the basis of comparison of step F.

Preferably according to the invention, in steps from A to C, one calculates each of the residual efficiency values ER-U, ER-M, ER-G, and in step E it acts on at the least those variables responsible for preventing ER-U, ER-M, ER-G from achieving optimal residual efficiency values

Preferably according to the invention, in step D the value of residual efficiency for the driver-vehicle interaction ER-UM is calculated on the basis of the actual statistical distribution and its descriptors or parameters and by adopting non-linear statistics, classification and pattern recognition analyses of the distribution of the values as calculated in steps A to C, in particular by recurrence quantitative analysis (RQA, Wallot S, Fusaroli R, Tylén K, Jegindø EM. Using complexity metrics with R-R intervals and BPM heart rate measures. Front Physiol. 2013;4:211. doi: 10.3389/fphys.2013.00211. PubMed PMID: 23964244; PubMed Central PMCID: PMC3741573) can be adopted as well.

Preferably according to the invention, that in step E the actuators are controlled only if the residual efficiency value is below an attention threshold predetermined or estimated by auto-adaptive estimates.

Preferably according to the invention, that step A comprises the following sub-steps:
- assuming the data coming from said set of biophysical sensors and relevant to normality-alteration statuses of single biophysical processes, for example, breathing frequency, breath temperature, skin temperature and blinking frequency, as values of respective partial variables relevant to the status of normality/alteration of the single biophysical process,
- estimating the residual efficiency with respect to the single variable on the basis of the difference between the current statistical distribution of the values of the variable and one or more reference pre-set values statistical distribution or estimated distribution by auto-adaptive estimates on the basis of the data history,
- estimating the residual efficiency of the driver ER-U, in particular by the analysis of mutual correlation of the variables or Recurrence Quantitative Analysis.

Preferably according to the invention, that step B comprises the following sub-steps:
- assuming the data coming from said set of ambient and operation sensors and relevant to the status of single devices or parameters, for example brakes, tires, engine, cooling, transmission, as values of the respective partial variables relevant to the status of wear/operation of the single device,
- estimating a residual efficiency with respect to every single variable on the basis of the difference between the current statistical distribution of the values of the variable and one or more reference pre-set values statistical distribution or estimated distribution by auto-adaptive estimates on the basis of the data history or according a pre-defined weighted average of efficiencies with respect to each single variable,
- estimating the residual efficiency of the driver ER-M, in particular by the analysis of mutual correlation of the variables or Recurrence Quantitative Analysis.

Preferably according to the invention, that step C comprises the following sub-steps:
- assuming the data coming from said set of ambient and operation sensors and relevant to the status of the single devices or parameters, for example instant speed, longitudinal and lateral instant acceleration, pressure on the brake pedal, braking force, steering wheel rotation, position of the vehicle by GPS and coherence of its trajectory with the road layout, as values of respective partial variables relevant to the status of use of the single device,
- estimating a residual efficiency with respect to every single variable on the basis of the difference between the current statistical distribution of the values of the variable and one or more reference pre-set values statistical distribution or estimated distribution by auto-adaptive estimates on the basis of the data history or according a pre-defined weighted average of efficiencies with respect to each single variable.
- estimating the drive behaviour residual efficiency ER-G, in particular by the analysis of mutual correlations of the variables or Recurrence Quantitative Analysis.

It is further subject-matter of the present invention a system for the control of the residual efficiency of the driver-vehicle interaction, characterized in that it comprises:
- a set of biophysical sensors suitable to measure a corresponding set of biophysical variables of the driver,
- a set of sensors of wear and operation of the electromechanical devices suitable to measure a corresponding set of wear and operation variables of the vehicle;
- a set of ambient and operation sensors, suitable to measure a corresponding set of ambient and operation variables;
- a set of internal actuators of the vehicle, suitable to modify said biophysical variables and/or said operation variables and/or said ambient and operation variables and to send warnings to the driver;
as well as an electronic processing and control unit, which comprises:
- a module for the estimate of the residual efficiency of the driver ER-U, which receives and elaborates the data acquired by said set of biophysical sensors;
- a module for the estimate of the residual efficiency of the vehicle ER-M, which receives and elaborates the data acquired by said set of ambient and operation sensors;
- a module for the estimate of the residual efficiency of the drive behaviour of the driver ER-G, which receives and elaborates the data acquired by said set of ambient and operation sensors;
each in communication with a module for the estimate of the residual efficiency of the system driver-vehicle ER-UM, which, on the basis of the estimated values of the residual efficiency of the driver ER-U, of the vehicle ER-M and of the driving behaviour of the driver ER-G, calculates a value of residual efficiency for the system driver-vehicle ER-UM and sends it to a supervision and control module, which controls said set of actuators, in such a way to increase the same residual efficiency of the driver-vehicle interaction ER-UM.

Preferably according to the invention, said set of biophysical sensors comprises a thermal infrared imaging device, with bolometric technology and having thermal sensitivity of the order of 3-5 hundredths of Celsius degree, full frame sampling frequencies of at least 16 frames per second, spatial resolution of the order of some milliradians.

Preferably according to the invention:
- said module for the estimate of the residual efficiency of the driver (ER-U) performs step A of the method according to the invention,
- said module for the estimate of the residual efficiency of the vehicle (ER-M) performs step B of the method according to the invention;
- said module for the estimate of the residual efficiency of the drive behaviour of the driver (ER-G) performs step C of the method according to the invention;
- said module for the estimate of the residual efficiency of the system driver-vehicle ER-UM performs step D of the method according to the invention;
- said supervision and control module performs step E of the method according to the invention.

### Example of quantitative calculation

The following example illustrates the general idea without loss of generality.

Let's assume the case of estimating the residual efficiency of the interaction driver-vehicle during a nighttime journey.

Let's assume that the most important parameter to estimate the residual efficiency of the driver is estimated on the solely basis of his/her capability to keep him/herself awake. Thus we will estimate his/her residual efficiency ER-UX through his/her eye-blinking rate(Hu Shuyan *, Zheng Gangtie, Driver drowsiness detection with eyelid related parameters by Support Vector Machine, Expert Systems with Applications, 2009) and slow eyelid closure (Mark E.et al, Specific sleepiness symptoms are indicators of performance impairment during sleep deprivation, Accident Analysis and Prevention, 2014).

Let be ES the eyelid closure speed and EBI the inter-blinking time interval.

Let assume that at a rest (the optimal performance condition, i.e., 100% of residual efficiency) EBI is normally distributed with a mean value EBRₘₑₐₙ = (x ± xsd) seconds, being the standard deviation EBR_{SD} = xsd seconds.
Let assume that at a rest, ES is normally distributed with a mean value ESₘₑₐₙ = (y ± sdy) cm/second, being the standard deviation ES_{SD} = sdy seconds.

Let be both parameters continuously computed through high-resolution thermal imaging, so to monitor them also during nighttime (Merla et al., Non-invasive system for monitoring driver's physical state, Conference Proceeding of the AITA 2011 - Advanced Infrared Technology and Applications Conference).

Let for example define ER-UX = 1 (i.e., 100%) when actual values for both EBR and ES range within EBRₘₑₐₙ ± EBR_{SD}, and ESₘₑₐₙ ± ES_{SD}, respectively.

This means that the optimal psychophysical state of the driver can be represented in the phase space defined by the two variables EBR and ES by a cluster of data values centered on the (EBRₘₑₐₙ, ESₘₑₐₙ) state (i.e., an accumulation point), each of these data values (EBR, ES) belonging to the interval (EBRₘₑₐₙ ± EBR ESₘₑₐₙ ± ES_{SD}). The actual state at a given time instant provides a new state defined by the coordinates (EBR, ES), the distance (i.e., metric) of which from the optimal range could be measured by means of specific mathematical operators, including for example standard n-dimensional metrics (e.g., Euclidean distance).

Let us assume, for the sake of clarity, the residual efficiency ER-UX values defined accordingly to the following classification table:

**Table 1.**

| | ESₘₑₐₙ - ES_{SD} <ES < ESₘₑₐₙ ± ES_{SD} | ESₘₑₐₙ - 2ES_{SD} <ES < ESₘₑₐₙ ± 2ES_{SD} |
|---|---|---|
| EBRₘₑₐₙ - EBR_{SD} <EBR < EBRₘₑₐₙ ± EBR_{SD} | ER-UX = 1 | ER-UX = 0,70 |
| EBRₘₑₐₙ - 2EBR_{SD} <EBR < EBRₘₑₐₙ ± 2EBR_{SD} | ER-UX = 0,70 | ER-UX = 0,50 |

The above table could be calibrated on the basis of literature data or experimental procedures.

In this example, even simple pattern recognition or classification algorithm could properly compare the actual values for ES and EBR and estimates ER-UX on the basis of the previous classification table.

The actual value ER-UX range is then added to the historical time series of the ER-UX data so to further feed the data distribution.

Should more parameters with more complex distributions be used, other algorithms could be used for the classification and pattern recognition, as suggested in the description of the invention.

Let's now assume that the parameter we decide to monitor to estimate the residual efficiency of the vehicle ER-M is its braking capability. Let's assume that factory test have provided a residual efficiency table for the brake operation ERBrake in order to stop the vehicle, according to the state of consumption of the brake tablets (BC) with respect to brand new tablets (0%) and the actual vehicle speed VS, accordingly to the following classification table 2.

**Table 2.**

| | BC < 25% | BC < 50% | BC < 75% |
|---|---|---|---|
| VS > 30 km/h | ERBrake = 1 | ERBrake = 0,80 | ERBrake = 0,60 |
| VS > 60 km/h | ERBrake = 1 | ERBrake = 0,70 | ERBrake = 0,50 |
| VS > 90 km/h | ERBrake = 1 | ERBrake = 0,60 | ERBrake = 0,40 |
| VS > 120 km/h | ERBrake = 1 | ERBrake = 0,50 | ERBrake = 0,30 |
| VS > 150 km/h | ERBrake = 1 | ERBrake = 0,40 | ERBrake = 0,20 |

The above table could be calibrated on the basis of factory data or experimental procedures.

The actual values for VS and BC could be obtained by the vehicle network of sensors.

In this example ER-MX coincides with ERBrake.

Simple pattern recognition or classification algorithm could properly compare the actual values for ERBrake and estimates ER-MX on the basis of the previous classification table.
The actual value ER-MX is then added to the historical time series of the ER-MX data so to further feed the data distribution.

Should more parameters with more complex distributions be used, other algorithms could be used for the classification and pattern recognition, as suggested in the description of the invention.

Let's now assume that the parameter we decide to monitor to estimate the residual efficiency of the driving behavior ER-G is the vehicle speed VS with respect to the actual speed limit of the tract of motorway that the vehicle is running. Such speed limit can be easily obtained by GPS navigator data or by automatic system for street signals detection.

Again, for the sake of clarity, let be VS the measured parameter, DVS the percentage difference between the actual speed VS and the limit speed. Let's assume that preliminary experimental tests or literature data have provided a residual efficiency table for estimating ER-GX according to the criterion that the higher VS and DVS, the lower ER-GX as increasing DVS determines lower chances for an optimal control of the vehicle (i.e., ER-GX = 1). Let's therefore assume valid the following classification table (the specific values could be assessed through experimental sessions on simulators):

**Table 3.**

| | DVS < 10% | 10% <DVS < 20% | 20% < DVS < 30% |
|---|---|---|---|
| VS < 30 km/h | ER-GX = 1 | ER-GX = 1 | ER-GX = 0,90 |
| 30 < VS < 50 km/h | ER-GX = 1 | ER-GX = 0,90 | ER-GX = 0,80 |
| 50 < VS < 70 km/h | ER-GX = 0,90 | ER-GX = 0,80 | ER-GX = 0,70 |
| 70 < VS < 90 km/h | ER-GX = 0,80 | ER-GX = 0,70 | ER-GX = 0,60 |
| 90 < VS < 110 km/h | ER-GX = 0,70 | ER-GX = 0,60 | ER-GX = 0,50 |
| 110 < VS < 130 km/h | ER-GX = 0,60 | ER-GX = 0,60 | ER-GX = 0,50 |
| 130 < VS < 150 km/h | ER-GX = 0,60 | ER-GX = 0,50 | ER-GX = 0,30 |

The actual values for ER-UX, ER-MX, and ER-GX are then sent to the module for estimating ER-UMX.

Again, for the sake of clarity, instead of using complex classification and pattern recognition analysis to estimate the actual values ER-UMX, we refer, in this representative example, to a classification table in order to explain the procedure in a simple case, without loss of generality.

So, let's assume that BC < 0,25, so that ERBrake = ER-MX = 1.

The classification table for ER-MUX then could read as, for example and without loss of generality (for ER-MX = 1):

**Table 4. Classification Table for ER-MUX (for ER-MX = 1)**

| | ER-GX - 1 | 0, 75 <ER-GX < 1 | 0,50 <ER-GX < 0,75 | 0,25 <ER-GX < 0,50 | ER-GX < 0,25 |
|---|---|---|---|---|---|
| ER-UX= 1 | ER-UMX = 1 | 0,90 | 0,80 | 0,70 | 0,60 |
| 0, 75 <ER-UX < 1 | 0,90 | 0,80 | 0,70 | 0,60 | 0,50 |
| 0,50 <ER-UX < 0,75 | 0,80 | 0,70 | 0,60 | 0,50 | 0,40 |
| 0,25 <ER-UX < 0,50 | 0,70 | 0,60 | 0,50 | 0,40 | 0,30 |
| ER-UX < 0,25 | 0,60 | 0,50 | 0,40 | 0,30 | 0,20 |

More complex classification tables or pattern recognition algorithms are needed when ER-MX ≠ 1.

Let now assume that the actual values for the significant variables and the corresponding residual efficiency are:
a) BC< 0,25
b) 70 < VS < 90 km/h
c) DVS < 10%
d) EBRₘₑₐₙ - EBR_{SD} <EBR < EBRₘₑₐₙ ± EBR_{SD}
e) ESₘₑₐₙ - 2ES_{SD} <ES < ESₘₑₐₙ ±2ES_{SD}

On the basis of a), ERBrake = 1, then ER-MX = 1 (see Table 2);

On the basis of b) and c), ER-GX = 0,80 (see Table 3) ;

On the basis of d) and e), ER-UX = =,70 (see Table 1) ;

Therefore, by the classification Table 4, one reads that the residual efficiency of the driver-vehicle interaction is estimated as ER-UMX = 0,60. Thus the driver-vehicle interaction is assumed to be equal to the 60% of the optimal level of interaction, that is the continuing driving in those conditions is 60% safe with respect to the full safety (with respect to the parameters so far considered).

As the most important factors are the evidence for drowsiness and a too high speed with respect to the limits, the controller will signal to the driver the opportunity to stop and/or to slow down the vehicle speed within the limits, so to increase his/her ER-MUX. This control is continuously performed, and the whole cycle is repeated from the beginning, that is from reading again BC, VS, DVS, EBR and ES and comparing with the updated distributions or collections of values.

The above example has been given by way of illustration but not by way of limitation. The quantitative calculation of the residual efficiency may vary depending on the scientific authors, but the method and system of the invention are applicable to any quantitative definition.

The present invention has been described by way of illustration and not by way of limitation, according to its preferred embodiments, but it should be understood that those skilled in the art can make variations and/or changes, without so departing from the related scope of protection, as defined by the following claims.

## Claims

1. Method for controlling the residual efficiency of driver-vehicle interaction, **characterized in that** it utilizes:
- a set of biophysical sensors suitable to measure a corresponding set of biophysical variables of the driver;
- a set of vehicle sensors of wear and operation of electromechanical devices of the vehicle, suitable to measure a corresponding set of wear and operation variables;
- a set of vehicle ambient and operation sensors, suitable to measure a corresponding set of ambient and operation variables;
- a set of internal actuators of the vehicle, suitable to modify said biophysical variables and/or said wear and operation variables and/or said ambient and operation variables and to send warnings to the driver;
and **in that** it executes the following steps;
A. Estimating a residual efficiency of the driver (ER-U), which expresses quantitatively the ability level of the driver to continue a safe drive, on the basis of deviations of the values of said biophysical variables with respect to corresponding reference distributions in the phase space of said biophysical variables or historical time series of said biophysical variables;
B. Estimating a residual efficiency of the vehicle (ER-M), which expresses quantitatively the ability level of the vehicle to continue a secure operation, on the basis of deviations of the values of said wear and operation variables with respect to corresponding reference distributions in the phase space of said wear and operation variables or historical time series of said wear and operation variables;
C. Estimating a residual efficiency of the driving behaviour of the driver (ER-G), which expresses quantitatively the ability level of the driver to continue to secure drive behaviour, on the basis of the deviations of the values of said ambient and operation variables with respect to corresponding reference distributions in the phase space of said ambient and operation variables or historical time series of said ambient and operation variables;
D. On the basis of the estimated values of the residual efficiency of the driver, the residual efficiency of the vehicle and the residual efficiency of the driving behaviour of the driver, calculating a residual efficiency value of the driver-vehicle interaction;
E. If the value of such a residual efficiency of the driver-vehicle interaction is below a predetermined threshold, verifying which one among said residual efficiency of the driver, of the vehicle and of the drive behaviour of the driver are below corresponding predetermined thresholds, and controlling said set of actuators so as to modify the relevant biophysical variables, wear and operation variables and ambient and operation variables to the end of increasing the residual efficiency of the driver-vehicle system;
F. Repeating steps from A to E continuously, comparing controls given in step E in a cycle to the actuators with the residual efficiency of the driver-vehicle interaction in the subsequent cycle,
G. Realizing a feedback control of the actuators on the basis of comparison of step F.

2. Method according to claim 1, **characterized in that** in steps from A to C, one calculates the residual efficiency of each variable, and in step E one acts on at least those variables that present a residual efficiency below corresponding predetermined thresholds.

3. Method according to claim 1 or 2, **characterized in that** in step D the value of residual efficiency for the driver-vehicle system is calculated as the most likely value by classification and pattern recognition analyses of the distribution of the values as calculated in steps A to C, in particular by recurrence analysis.

4. Method according to any claim 1 to 3, **characterized in that** in step E the actuators are controlled only if the overall residual efficiency value is below an attention threshold predetermined or estimated by auto-adaptive estimates.

5. Method according to any claim 1 to 4, **characterized in that** step A comprises the following sub-steps:
- assuming the data coming from said set of biophysical sensors and relevant to normality-alteration statuses of single biophysical processes, for example, breathing frequency, breath temperature, skin temperature and blinking frequency, as values of respective partial variables relevant to the status of normality/alteration of the single biophysical process,
- estimating the residual efficiency with respect to the single variable on the basis of the difference between the current value of the variable and one or more reference values pre-set or estimated by auto-adaptive estimates on the basis of the data history,
- estimating the residual efficiency of the driver, in particular by the analysis of mutual correlation of the variables.

6. Method according to any claim 1 to 5, **characterized in that** step B comprises the following sub-steps:
- assuming the data coming from said set of ambient and operation sensors and relevant to statuses of single devices or parameters, for example brakes, tires, engine, cooling, transmission, as values of respective partial variables relevant to the status of wear/operation of the single device,
- estimating a residual efficiency with respect to every single variable on the basis of the difference between the current value of the variable and one or more reference values pre-set or estimated by auto-adaptive estimates on the basis of the data history,
- estimating the vehicle residual efficiency, in particular as weighted average of efficiencies with respect to every single variable.

7. Method according to any claim 1 to 6, **characterized in that** step C comprises the following sub-steps:
- assuming the data coming from said set of ambient and operation sensors and relevant to statuses of single devices or parameters, for example instant speed, longitudinal and lateral instant acceleration, pressure on the brake pedal, braking force, steering wheel rotation, position of the vehicle by GPS and coherence of its trajectory with the road layout, as values of respective partial variables relevant to the status of use of the single device,
- estimating a residual efficiency with respect to every single variable on the basis of the difference between the current value of the variable and one or more reference values pre-set or estimated by auto-adaptive estimates on the basis of the data history,
- estimating the drive behaviour residual efficiency, in particular by the analysis of mutual correlations of the variables.

8. System for the control of the residual efficiency of the driver-vehicle interaction, **characterized in that** it comprises:
- a set of biophysical sensors suitable to measure a corresponding set of biophysical variables of the driver;
- a set of sensors of wear and operation of electromechanical devices of the vehicle, suitable to measure a corresponding set of wear and operation variables;
- a set of ambient and operation sensors, suitable to measure a corresponding set of ambient and operation variables;
- a set of internal actuators of the vehicle, suitable to modify said biophysical variables and/or said wear and operation variables and/or said ambient and operation variables and to send warnings to the driver;
as well as an electronic processing and control unit, which comprises:
- a module for the estimate of the residual efficiency of the driver (ER-U), which is configured to receive and elaborate the data acquired by said set of biophysical sensors;
- a module for the estimate of the residual efficiency of the vehicle (ER-M), which is configured to receive and elaborate the data acquired by said set of ambient and operation sensors;
- a module for the estimate of the residual efficiency of the drive behaviour of the driver (ER-G), which is configured to receive and elaborate the data acquired by said set of ambient and operation sensors;
each in communication with a module for the estimate of the residual efficiency of the driver-vehicle interaction (ER-UM), which is configured to, on the basis of the estimated values of the residual efficiency of the driver, the vehicle and the driving behaviour of the driver, calculate a value of residual efficiency for the system driver-vehicle and send it to a supervision and control module, which is configured to control said set of actuators on its basis, in such a way to increase the same residual efficiency of the driver-vehicle interaction.

9. System according to claim 8, **characterized in that** said set of biophysical sensors comprises a thermal infrared imaging device, with bolometric technology and having thermal sensitivity of the order of 3-5 hundredths of Celsius degree, full frame sampling frequencies of at least 16 frames per second, spatial resolution of the order of some milliradians.

10. System according to claim 8 or 9, **characterized in that**:
- said module for the estimate of the residual efficiency of the driver (ER-U) performs step A of the method according to any claim 1 to 7,
- said module for the estimate of the residual efficiency of the vehicle (ER-M) performs step B of the method according to any claim 1 to 7;
- said module for the estimate of the residual efficiency of the drive behaviour of the driver (ER-G) performs step C of the method according to any claim 1 to 7;
- said module for the estimate of the residual efficiency of the system driver-vehicle (ER-UM) performs step D of the method according to any claim 1 to 7;
- said supervision and control module performs step E and F of the method according to any claim 1 to 7.

## Patentansprüche

1. Verfahren zum Steuern der verbleibenden Effizienz einer Fahrer-Fahrzeug-Interaktion, **dadurch gekennzeichnet, dass** es verwendet:
- einen Satz biophysikalischer Sensoren, die geeignet sind, einen entsprechenden Satz biophysikalischer Variablen des Fahrers zu messen;
- einen Satz Fahrzeugsensoren für Verschleiß und Betrieb der elektromechanischen Vorrichtungen des Fahrzeugs, die geeignet sind, einen entsprechenden Satz von Verschleiß- und Betriebsvariablen zu messen;
- ein Satz Fahrzeug-Umgebungs- und Betriebssensoren, die geeignet sind, einen entsprechenden Satz von Umgebungs- und Betriebsvariablen zu messen;
- einen Satz interner Aktuatoren des Fahrzeugs, die geeignet sind, die biophysikalischen Variablen und/oder die Verschleiß- und Betriebsvariablen und/oder die Umgebungs- und Betriebsvariablen zu modifizieren und Warnungen an den Fahrer zu senden;
und dadurch, dass es die folgenden Schritte ausführt;
A. Abschätzen einer verbleibenden Effizienz des Fahrers (ER-U), die quantitativ das Fähigkeitsniveau des Fahrers ausdrückt, eine sichere Fahrt fortzusetzen, auf der Grundlage von Abweichungen der Werte der biophysikalischen Variablen in Bezug auf entsprechende Referenzverteilungen im Phasenraum der biophysikalischen Variablen oder historischen Zeitreihen der biophysikalischen Variablen;
B. Abschätzen einer verbleibenden Effizienz des Fahrzeugs (ER-M), die quantitativ das Fähigkeitsniveau des Fahrzeugs ausdrückt, einen sicheren Betrieb fortzusetzen, auf der Grundlage von Abweichungen der Werte der Verschleiß- und Betriebsvariablen in Bezug auf entsprechende Referenzverteilungen im Phasenraum der Verschleiß- und Betriebsvariablen oder einer historischen Zeitreihe der Verschleiß- und Betriebsvariablen;
C. Abschätzen einer verbleibenden Effizienz des Fahrverhaltens des Fahrers (ER-G), die quantitativ das Fähigkeitsniveau des Fahrers ausdrückt, das Fahrverhalten weiterhin fortzusetzen, auf der Grundlage der Abweichungen der Werte der Umgebungs- und Betriebsvariablen in Bezug auf entsprechende Referenzverteilungen im Phasenraum der Umgebungs- und Betriebsvariablen oder der historischen Zeitreihe der Umgebungs- und Betriebsvariablen;
D. Berechnen, auf der Grundlage der abgeschätzten Werte der verbleibenden Effizienz des Fahrers, der verbleibenden Effizienz des Fahrzeugs und der verbleibenden Effizienz des Fahrverhaltens des Fahrers, einer verbleibenden Effizienz der Fahrer-Fahrzeug-Interaktion;
E. Wenn der Wert einer solchen verbleibenden Effizienz der Fahrer-Fahrzeug-Interaktion unterhalb einem vorbestimmten Schwellenwert liegt, Überprüfen, welcher von den verbleibenden Effizienzwerten des Fahrers, des Fahrzeugs und des Fahrverhaltens des Fahrers unterhalb der entsprechenden vorbestimmten Schwellenwerten liegen, und Steuern des Satzes von Aktuatoren derart, um die biophysikalisch relevanten Variablen, Verschleiß- und Betriebsvariablen und Umgebungs- und Betriebsvariablen bis zum Ende der Erhöhung der verbleibenden Effizienz des Fahrer-Fahrzeugs zu modifizieren;
F. Kontinuierliches Wiederholen der Schritte von A bis E, Vergleichen der in Schritt E an die Aktuatoren abgegebenen Steuerungen mit der verbleibenden Effizienz der Fahrer-Fahrzeug-Interaktion in dem darauffolgenden Zyklus,
G. Realisieren einer Rückführung der Aktuatoren auf der Grundlage des Vergleichs aus Schritt F.

2. Verfahren nach Anspruch 1, **dadurch gekennzeichnet, dass** in den Schritten von A bis C die verbleibende Effizienz jeder Variablen berechnet wird und in Schritt E auf mindestens diejenigen Variablen eigewirkt wird, die eine verbleibende Effizienz unterhalb entsprechender vorbestimmter Schwellenwerte aufweisen.

3. Verfahren nach Anspruch 1 oder 2, **dadurch gekennzeichnet, dass** in Schritt D der Wert der verbleibenden Effizienz für das Fahrer-Fahrzeugsystem durch Klassifikations- und Mustererkennungsanalysen der Verteilung der in den Schritten A bis C berechneten Werte als der am wahrscheinlichste Wert berechnet wird, insbesondere durch Wiederholungsanalyse.

4. Verfahren nach einem der Ansprüche 1 bis 3, **dadurch gekennzeichnet, dass** in Schritt E die Aktoren nur dann angesteuert werden, wenn die gesamte verbleibenden Effizienz unterhalb einer Aufmerksamkeitsschwelle liegt, die durch auto-adaptive Abschätzungen vorgegeben oder abgeschätzt wurde.

5. Verfahren nach einem der Ansprüche 1 bis 4, **dadurch gekennzeichnet, dass** Schritt A die folgenden Teilschritte umfasst:
- Voraussetzen der Daten, die aus dem Satz biophysikalischer Sensoren stammen und für Normalitätsänderungszustände einzelner biophysikalischer Prozesse relevant sind, zum Beispiel Atemfrequenz, Atmungstemperatur, Hauttemperatur und Lidfrequenz, als Werte der entsprechenden Teilvariablen, die für den Status der Normalität/Änderung des einzelnen biophysikalischen Prozesses relevant sind,
- Abschätzen der verbleibenden Effizienz in Bezug auf die einzelne Variable auf der Grundlage der Differenz zwischen dem aktuellen Wert der Variable und einem oder mehreren Referenzwerten, die durch auto-adaptive Abschätzungen auf der Grundlage der Datenhistorie vorgegeben oder abgeschätzt werden,
- Abschätzen der verbleibenden Effizienz des Fahrers, insbesondere durch die Analyse der gegenseitigen Korrelation der Variablen.

6. Verfahren nach einem der Ansprüche 1 bis 5, **dadurch gekennzeichnet, dass** Schritt B die folgenden Teilschritte umfasst:
- Voraussetzen der Daten, die aus dem Satz von Umgebungs- und Betriebssensoren stammen, die für Zustände einzelner Geräte oder Parameter, zum Beispiel Bremsen, Reifen, Motor, Kühlung, Getriebe, relevant sind, als Werte der entsprechenden Teilvariablen, die für den Zustand des Verschleißs/Betriebs der einzelnen Geräte relevant sind,
- Abschätzen einer verbleibenden Effizienz in Bezug auf jede einzelne Variable auf der Grundlage der Differenz zwischen dem aktuellen Wert der Variable und einem oder mehreren Referenzwerten, die auf der Grundlage der Datenhistorie durch auto-adaptive Abschätzungen vorgegeben oder abgeschätzt werden,
- Abschätzen der verbleibenden Effizienz des Fahrzeugs, insbesondere als gewichteter Mittelwert der Effizienzen für jede einzelne Variable.

7. Verfahren nach einem der Ansprüche 1 bis 6, **dadurch gekennzeichnet, dass** Schritt C die folgenden Teilschritte umfasst:
- Voraussetzen der Daten, die aus dem Satz von Umgebungs- und Betriebssensoren stammen und für Zustände einzelner Geräte oder Parameter relevant sind, zum Beispiel augenblickliche Geschwindigkeit, momentane Beschleunigung in Längsrichtung und Querrichtung, Druck auf das Bremspedal, Bremskraft, Lenkraddrehung, Position des Fahrzeugs durch GPS und Kohärenz seiner Trajektorie mit der Straßenausgestaltung als Werte der entsprechenden Teilvariablen, die für den Nutzungsstatus der einzelnen Geräte relevant sind,
- Abschätzen einer verbleibenden Effizienz in Bezug auf jede einzelne Variable auf der Grundlage der Differenz zwischen dem aktuellen Wert der Variable und einem oder mehreren durch auto-adaptive Abschätzungen auf der Grundlage der Datenhistorie voreingestellten oder abgeschätzten Referenzwerten,
- Abschätzen der verbleibenden Effizienz des Fahrverhaltens, insbesondere durch die Analyse gegenseitiger Korrelationen der Variablen.

8. System zur Steuerung der verbleibenden Effizienz der Fahrer-Fahrzeug-Interaktion, **dadurch gekennzeichnet, dass** es umfasst:
- einen Satz biophysikalischer Sensoren, die geeignet sind, einen entsprechenden Satz biophysikalischer Variablen des Fahrers zu messen;
- einen Satz Sensoren für Verschleiß und Betrieb der elektromechanischen Vorrichtungen des Fahrzeugs, die geeignet sind, einen entsprechenden Satz von Verschleiß- und Betriebsvariablen zu messen;
- ein Satz Umgebungs- und Betriebssensoren, die geeignet sind, einen entsprechenden Satz von Umgebungs- und Betriebsvariablen zu messen;
- einen Satz interner Aktuatoren des Fahrzeugs, die geeignet sind, die biophysikalischen Variablen und/oder die Verschleiß- und Betriebsvariablen und/oder die Umgebungs- und Betriebsvariablen zu modifizieren und Warnungen an den Fahrer zu senden;
sowie eine elektronische Auswerte- und Steuereinheit, die aus folgenden Komponenten besteht:
- ein Modul für das Abschätzen der verbleibenden Effizienz des Fahrers (ER-U), das so konfiguriert ist, dass es die von dem Satz biophysikalischer Sensoren erfassten Daten empfängt und ausarbeitet;
- ein Modul für die Abschätzung der verbleibenden Effizienz des Fahrzeugs (ER-M), das so konfiguriert ist, dass es die von dem genannten Satz von Umgebungs- und Betriebssensoren erfassten Daten empfängt und ausarbeitet;
- ein Modul für das Abschätzen der verbleibenden Effizienz des Fahrverhaltens des Fahrers (ER-G), das so konfiguriert ist, dass es die von dem genannten Satz von Umgebungs- und Betriebssensoren erfassten Daten empfängt und verarbeitet;
wobei jedes in Kommunikation mit einem Modul für das Abschätzen der verbleibenden Effizienz der Fahrer-Fahrzeug-Interaktion (ER-UM) steht, das konfiguriert ist, um auf der Grundlage der abgeschätzten Werte der verbleibenden Effizienz des Fahrers, des Fahrzeugs und des Fahrverhaltens des Fahrers einen Wert der verbleibenden Effizienz für das Systemfahrer-Fahrzeug zu berechnen und diesen an ein Überwachungs- und Steuerungsmodul zu senden, das so konfiguriert ist, dass es den Satz von Aktoren auf seiner Grundlage steuert, auf eine solche Art, dass dieselbe verbleibende Effizienz der Fahrer-Fahrzeug-Interaktion erhöht ist.

9. System nach Anspruch 8, **dadurch gekennzeichnet, dass** der Satz biophysikalischer Sensoren eine thermische Infrarot-Bildaufnahmevorrichtung mit bolometrischer Technologie und einer thermischen Empfindlichkeit von etwa 3 bis 5 Hundertstel von Grad Celsius, voller Bildaufnahmefrequenz von mindestens 16 Bildern pro Sekunde und einer räumlichen Auflösung in der Größenordnung von einigen Milliradianen umfasst.

10. System nach Anspruch 8 oder 9, **dadurch gekennzeichnet, dass**:
- das Modul für das Abschätzen der verbleibenden Effizienz des Fahrers (ER-U) Schritt A des Verfahrens nach einem der Ansprüche 1 bis 7 durchführt,
- das Modul für das Abschätzen der verbleibenden Effizienz des Fahrzeugs (ER-M) Schritt B des Verfahrens nach einem der Ansprüche 1 bis 7 durchführt;
- das Modul für das Abschätzen der verbleibenden Effizienz des Fahrverhaltens des Fahrers (ER-G) Schritt C des Verfahrens nach einem der Ansprüche 1 bis 7 durchführt;
- das Modul für das Abschätzen der verbleibenden Effizienz des Systems Fahrer-Fahrzeug (ER-UM) Schritt D des Verfahrens nach einem der Ansprüche 1 bis 7 durchführt;
- das Überwachungs- und Steuerungsmodul die Schritte E und F des Verfahrens gemäß einem der Ansprüche 1 bis 7 durchführt.

## Revendications

1. Procédé pour contrôler l'efficacité résiduelle de l'interaction conducteur-véhicule, **caractérisé en ce qu'**il utilise :
- un jeu de capteurs biophysiques adaptés pour mesurer un jeu correspondant de variables biophysiques du conducteur ;
- un jeu de capteurs de véhicule d'usure et de fonctionnement des dispositifs électromécaniques du véhicule, adaptés pour mesurer un jeu correspondant de variables d'usure et de fonctionnement ;
- un jeu de capteurs d'ambiance et de fonctionnement du véhicule, adaptés pour mesurer un jeu correspondant de variables d'ambiance et de fonctionnement ;
- un jeu d'actionneurs internes du véhicule, adaptés pour modifier lesdites variables biophysiques et/ou lesdites variables d'usure et de fonctionnement et/ou lesdites variables d'ambiance et de fonctionnement et pour envoyer des avertissements au conducteur ;
et **en ce qu'**il exécute les étapes suivantes ;
A. estimation d'une efficacité résiduelle du conducteur (ER-U), qui exprime quantitativement le niveau de capacité du conducteur à poursuivre une conduite sûre, sur la base d'écarts des valeurs desdites variables biophysiques par rapport à des distributions de référence correspondantes dans l'espace des phases desdites variables biophysiques ou les séries temporelles historiques desdites variables biophysiques ;
B. estimation d'une efficacité résiduelle du véhicule (ER-M), qui exprime quantitativement le niveau de capacité du véhicule à poursuivre un fonctionnement sûr, sur la base d'écarts des valeurs desdites variables d'usure et de fonctionnement par rapport à des distributions de référence correspondantes dans l'espace des phases desdites variables d'usure et de fonctionnement ou les séries temporelles historiques desdites variables d'usure et de fonctionnement ;
C. estimation d'une efficacité résiduelle du comportement de conduite du conducteur (ER-G), qui exprime quantitativement le niveau de capacité du conducteur à poursuivre un comportement de conduite sûr, sur la base des écarts des valeurs desdites variables d'ambiance et de fonctionnement par rapport à des distributions de référence correspondantes dans l'espace des phases desdites variables d'ambiance et de fonctionnement ou les séries temporelles historiques desdites variables d'ambiance et de fonctionnement ;
D. sur la base des valeurs estimées de l'efficacité résiduelle du conducteur, de l'efficacité résiduelle du véhicule et de l'efficacité résiduelle du comportement de conduite du conducteur, calcul d'une valeur d'efficacité résiduelle de l'interaction conducteur-véhicule ;
E. si la valeur d'une telle efficacité résiduelle de l'interaction conducteur-véhicule est inférieure à un seuil prédéterminé, vérification de laquelle parmi ladite efficacité résiduelle du conducteur, du véhicule et du comportement de conduite du conducteur est inférieure à des seuils prédéterminés correspondants, et contrôle dudit jeu d'actionneurs de manière à modifier les variables biophysiques, les variables d'usure et de fonctionnement et les variables d'ambiance et de fonctionnement pertinentes afin d'augmenter l'efficacité résiduelle du système conducteur-véhicule ;
F. répétition des étapes A à E de manière continue, en comparant les contrôles indiqués à l'étape E dans un cycle aux actionneurs avec l'efficacité résiduelle de l'interaction conducteur-véhicule dans le cycle suivant,
G. réalisation d'un contrôle rétroactif des actionneurs sur la base de la comparaison de l'étape F.

2. Procédé selon la revendication 1, **caractérisé par** le calcul, dans les étapes A à C, de l'efficacité résiduelle de chaque variable, et par l'action, dans l'étape E, sur au moins les variables qui présentent une efficacité résiduelle inférieure à des seuils prédéterminés correspondants.

3. Procédé selon la revendication 1 ou 2, **caractérisé en ce que** dans l'étape D la valeur de l'efficacité résiduelle pour le système conducteur-véhicule est calculée comme la valeur la plus probable par des analyses de classification et de reconnaissance des formes de la distribution des valeurs selon les calculs des étapes A à C, en particulier par analyse de récurrence.

4. Procédé selon l'une quelconque des revendications 1 à 3, **caractérisé en ce que** dans l'étape E les actionneurs sont contrôlés uniquement si la valeur d'efficacité résiduelle globale est inférieure à un seuil d'attention prédéterminé ou estimé par des estimations auto-adaptatives.

5. Procédé selon l'une quelconque des revendications 1 à 4, **caractérisé en ce que** l'étape A comprend les sous-étapes suivantes :
- supposer les données provenant dudit jeu de capteurs biophysiques et pertinentes pour les statuts de normalité-altération de processus biophysiques uniques, par exemple, la fréquence respiratoire, la température de l'air expiré, la température de la peau et la fréquence de clignement des yeux, comme des valeurs des variables partielles respectives pertinentes pour le statut de normalité/altération du processus biophysique unique,
- estimer l'efficacité résiduelle par rapport à la variable unique sur la base de la différence entre la valeur actuelle de la variable et une ou plusieurs valeurs de référence préétablies ou estimées par des estimations auto-adaptatives sur la base de l'historique des données,
- estimer l'efficacité résiduelle du conducteur, en particulier par l'analyse de la corrélation mutuelle des variables.

6. Procédé selon l'une quelconque des revendications 1 à 5, **caractérisé en ce que** l'étape B comprend les sous-étapes suivantes :
- supposer les données provenant dudit jeu de capteurs d'ambiance et de fonctionnement et pertinentes pour les statuts de dispositifs ou de paramètres uniques, par exemple des freins, des pneus, du moteur, du refroidissement, de la transmission, comme des valeurs des variables partielles respectives pertinentes pour le statut de l'usure/du fonctionnement du dispositif unique,
- estimer une efficacité résiduelle par rapport à chaque variable unique sur la base de la différence entre la valeur actuelle de la variable et une ou plusieurs valeurs de référence préétablies ou estimées par des estimations auto-adaptatives sur la base de l'historique des données,
- estimer l'efficacité résiduelle du véhicule, en particulier en tant que moyenne pondérée des efficacités par rapport à chaque variable unique.

7. Procédé selon l'une quelconque des revendications 1 à 6, **caractérisé en ce que** l'étape C comprend les sous-étapes suivantes :
- supposer les données provenant dudit jeu de capteurs d'ambiance et de fonctionnement et pertinentes pour les statuts de dispositifs ou paramètres uniques, par exemple, la vitesse instantanée, l'accélération instantanée longitudinale et latérale, la pression sur la pédale de frein, la force de freinage, la rotation du volant, la position du véhicule par GPS et la cohérence de sa trajectoire par rapport au tracé de la route, comme des valeurs des variables partielles respectives pertinentes pour le statut de l'utilisation du dispositif unique,
- estimer une efficacité résiduelle par rapport à chaque variable unique sur la base de la différence entre la valeur actuelle de la variable et une ou plusieurs valeurs de référence préétablies ou estimées par des estimations auto-adaptatives sur la base de l'historique des données,
- estimer l'efficacité résiduelle du comportement de conduite, en particulier par l'analyse des corrélations mutuelles des variables.

8. Système pour le contrôle de l'efficacité résiduelle de l'interaction conducteur-véhicule, **caractérisé en ce qu'**il comprend :
- un jeu de capteurs biophysiques adaptés pour mesurer un jeu correspondant de variables biophysiques du conducteur ;
- un jeu de capteurs d'usure et de fonctionnement des dispositifs électromécaniques du véhicule, adaptés pour mesurer un jeu correspondant de variables d'usure et de fonctionnement ;
- un jeu de capteurs d'ambiance et de fonctionnement du véhicule, adaptés pour mesurer un jeu correspondant de variables d'ambiance et de fonctionnement ;
- un jeu d'actionneurs internes du véhicule, adaptés pour modifier lesdites variables biophysiques et/ou lesdites variables d'usure et de fonctionnement et/ou lesdites variables d'ambiance et de fonctionnement et pour envoyer des avertissements au conducteur ;
ainsi qu'une unité de traitement et de contrôle électronique, qui comprend :
- un module pour l'estimation de l'efficacité résiduelle du conducteur (ER-U), qui est configurée pour recevoir et élaborer les données acquises par ledit jeu de capteurs biophysiques ;
- un module pour l'estimation de l'efficacité résiduelle du véhicule (ER-M), qui est configurée pour recevoir et élaborer les données acquises par ledit jeu de capteurs d'ambiance et de fonctionnement ;
- un module pour l'estimation de l'efficacité résiduelle du comportement de conduite du conducteur (ER-G), qui est configurée pour recevoir et élaborer les données acquises par ledit jeu de capteurs d'ambiance et de fonctionnement ;
chacun en communication avec un module pour l'estimation de l'efficacité résiduelle de l'interaction conducteur-véhicule (ER-UM), qui est configuré pour, sur la base des valeurs estimées de l'efficacité résiduelle du conducteur, du véhicule et du comportement de conduite du conducteur, calculer une valeur d'efficacité résiduelle pour le système conducteur-véhicule et l'envoyer à un module de supervision et de contrôle, qui est configuré pour contrôler ledit jeu d'actionneurs sur sa base, de manière à augmenter la même efficacité résiduelle de l'interaction conducteur-véhicule.

9. Système selon la revendication 8, **caractérisé en ce que** ledit jeu de capteurs biophysiques comprend un dispositif d'imagerie infrarouge thermique, avec technologie bolométrique et ayant une sensibilité thermique de l'ordre de 3 à 5 centièmes de degré Celsius, des fréquences d'échantillonnage d'image complète d'au moins 16 images par seconde, une résolution spatiale de l'ordre de quelques milliradians.

10. Système selon la revendication 8 ou 9, **caractérisé en ce que** :
- ledit module pour l'estimation de l'efficacité résiduelle du conducteur (ER-U) réalise l'étape A du procédé selon l'une quelconque des revendications 1 à 7,
- ledit module pour l'estimation de l'efficacité résiduelle du véhicule (ER-M) réalise l'étape B du procédé selon l'une quelconque des revendications 1 à 7 ;
- ledit module pour l'estimation de l'efficacité résiduelle du comportement de conduite du conducteur (ER-G) réalise l'étape C du procédé selon l'une quelconque des revendications 1 à 7 ;
- ledit module pour l'estimation de l'efficacité résiduelle du système conducteur-véhicule (ER-UM) réalise l'étape D du procédé selon l'une quelconque des revendications 1 à 7 ;
- ledit module de supervision et de contrôle réalise les étapes E et F du procédé selon l'une quelconque des revendications 1 à 7.
